# EUROPEAN PATENT APPLICATION

(11) **EP 2 918 846 A1**
(43) Date of publication of application: **16.09.2015**
(21) Application number: 14159937.3
(22) Date of filing: 14.03.2014
(51) Int. Cl.: F04D 29/12, F04D 29/14, F16J 15/00

(54) **Shaft seal arrangement**

(71) Applicant: Siemens Aktiengesellschaft, 80333 München (DE)
(72) Inventor: Eelman, Rob, 8141 Heino (NL); Schoeman, Chiel, 7443NC Nijverdal (NL)

(57) **Abstract**

The invention relates to a shaft seal arrangement (SSA) to seal a gap (GP) between a stator (ST) and a rotor (RT), said rotor (RT) extending rotatable along a rotor (RT) axis (X),
said gap (GP) extending axially from an inboard-side (IBS) to an outboard-side (OBS),
said shaft seal arrangement (SSA) comprising at least one main seal (MS),

To make a failure of a shaft seal safer it is proposed that in said gap (GP) said shaft seal arrangement (SSA) comprises a valve (V) to block a flow through said gap (GP),
wherein said valve (V) comprises a circumferentially extending gap blocker (GBP),
wherein said gap blocker (GPB) is axially moveable from an open position (OPO) to a closed position (CPO),
wherein said gap blocker (GBP) comprises a first seal surface (SS1),
wherein said shaft seal arrangement (SSA) comprises a second seal surface (SS2),
wherein said gap blocker (GPB) is build such that said first seal surface (SS1) contacts said second seal surface (SS2) after being moved axially from said open position (OPO) to said closed positions (CPO) closing said gap (GP),
wherein said gap blocker (GPB) is moved axially by an actuator (AC).

## Description

The invention relates to a shaft seal arrangement to seal a gap between a stator and a rotor extending rotatable along a rotor axis, said gap extending from an inboard-side to an outboard-side, wherein said shaft seal arrangement comprises a main inboard-seal and a main outboard-seal.

Shaft seal arrangements according to the incipiently mentioned type are commonly used in fluid energy machines as compressors or expanders. The preferred field of application of the invention is a shaft seal arrangement comprises gas seals, especially dry gas seals. Dry gas seals became the dominant shaft seal type in the field of process gas compression. Especially in centrifugal compressors even in high pressure application dry gas seals combine the benefit of low leakage and long lifetime. One significant disadvantage is a high sensitivity regarding seal gas quality and operating conditions. If the requirements are not met said dry gas seals are likely to be destroyed without any remaining seal effects. For this reason dry gas seals are commonly combined with other seal types or are provided redundantly. In cases of higher safety requirements dry gas seals are provided redundantly and are combined with other seal types, for example with labyrinth seals.

For WO 2012/136496 A1 a dry gas seal cartridge according to the incipiently defined type is known.

A catastrophic failure of said dry gas seal nearly always means at least a temporary leakage of the process fluid being under pressure in the fluid energy machine. Assuming ordinary safety measures, high blow of rates during a dry gas seal failure are to be expected. In applications with toxic or explosive process fluids the reduction of leakages is highly important.

It is therefore one object of the invention to maximize safe operation of the machine with a shaft seal arrangement according to the invention especially to fulfill all requirements to handle also toxic or explosive gas. The invention proposes a shaft seal arrangement according to the incipiently mentioned type comprising the additional features of the characterizing portion of claim 1. The respectively depended claims deal with preferred embodiments of the invention. A person with ordinary skill in the art will be able to combine claimed features and features mentioned in the description without leaving the scope of the invention.

A shaft seal arrangement according to the invention is preferably a gas seal but can also be a labyrinth seal. The most preferred seal type for the inboard-seal and the outboard-seal is a dry gas seal. Such dry gas seals are known where in the prior art. The most preferred dry gas seal type is a radial tandem dry gas seal also known from WO 2012/136496 A1.

Terms like axial, radial, circumferential and the like respectively refer to a central axis of the shaft seal coinciding with a rotational axis of a rotor of a respective fluid energy machine if not indicated otherwise.

The terms inboard and outboard refer to the respective position with regard to their proximity the inside of said fluid energy machine, which is in most cases hermetically and capsulated by a casing and on the outboard-side to the relative proximately to the ambience of the fluid energy machine. This means that said inboard-seal is more proximate to the inside of said fluid energy machine and that said outboard-seal is more proximate to the outside of said fluid energy machine.

The term valve in the context of this patent application means a devise to control a fluid flow through a channel, wherein said channel can have varies shapes. In the context of this patent application the valve box a circumferential gap between said rotor and said stator in the ambience of said inboard shaft seal or said outboard shaft seal.

One preferred embodiment of the invention provides at least one radial step of said stator and/or said rotor being at least part of said second seal surface. Said first seal surface might contact said second seal surface such that a contact plane between both seal surfaces is perpendicular to the axial direction or in an angle to said axial direction between -90° smaller α smaller +90°.

Preferably said gap blocker according to the invention is part of the stator and the second seal surface belongs to the rotor. In principal said gap blocker with its first seal surface can also belong to the rotor and said second seal surface can be part of said stator. However, since it is more complex to provide said gap blocker as a high speed rotating part it is preferred at least under high speed conditions to provide said gap blocker on the stator side.

One preferred embodiment provides said actuator and an electrical actuator being activated by a control unit to close said gap in case a gas seal failure.

Another preferred embodiment provides said actuator comprising at least one portion exposed to said gap, such that an axial flow through said gap causes a pressure loss at said exposed portion and such that said portion receives an axial force from said flow moving said gap blocker axially into said open position or into said closed position. The second alternative of being said gap blocker in the closed position when an axial force from said actuator exceeds a certain limit is preferred.

Preferably said portion is a labyrinth seal positioned to seal said gap. In a preferred embodiment said gap blocker has a ring shape. It is preferred that said portion of said actuator is an non rotating part and preferably is sliding a least supported by said stator to enable axial movement but to avoid circumferential movement. Another possibility is the attachment of said portion of said actuator to a gas seal ring of said inboard-seal and/or said outboard-seal. Preferably said portion of said actuator is fixedly connected or one piece with said stationary gas seal ring of said inbox seal and/or said outboard-seal. Most preferred said portion of said actuator is arranged on the inboard-side of said outboard-seal or one piece with said axial moveable stationary part of said outboard-seal since said outboard-seal in common application during normal operation has to cope with a much lower pressure difference than the inboard-seal. If the inboard-seal fails this pressure difference on the outboard-seal respectively on the portion of the actuator changes significantly. This enables to tune said actuator such that in case of the inboard-seal failure the actuator moves the gap blocker into the closed position in a very reliable way. One preferred embodiment provides an elastic element prestressing said actuator into the open position of said gap blocker. This elastic element is pre-stressed respectively tuned such that in case of a failure of the inboard-seal and/or outboard-seal the changed pressure difference on the portion moves the gap blocker into the closed position against the force of the elastic element. The elastic element can be any type of spring of any material. Preferably the spring material is a metal since metal springs are working well under a wide temperature range.

One preferred embodiment provides a secondary seal between said gap blocker of said valve and a respective part, to which said gap blocker is axially slidingly connected too. This secondary seal is meant to seal the clearance gap between the gap blocker and the respective part against any pressure difference establishing over the gap blocker. This secondary seal can be an O-ring.

The above mentioned attributes and other features and advantages of this invention and the manner of attaining them will become more a parent and the invention itself will be better understood by reference to the following description of the currently best mode of carrying out the invention taken in conjunction with the accompanying drawings, wherein
- Figures 1,3,5: respectively show an axial cross section schematically depicting a shaft seal arrangement according to the invention in open position of the gap blocker.
- Figures 2,4,6: respectively show an axial cross section schematically depicting a shaft seal arrangement according to the invention in closed position of the gap blocker.

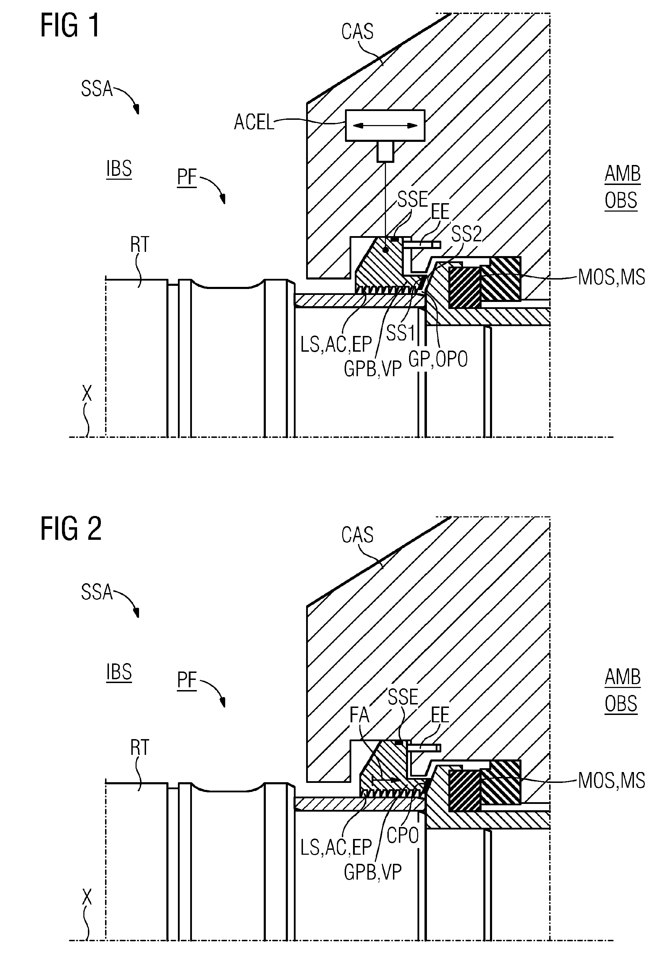

Figures 1, 3, 5 respectively show a shaft seal arrangement SSA according to the invention in an open position OPO of a gap blocker GPB according to the invention. Figure 2, 4 and 6 respectively show said shaft seal arrangement of the respective preceding figure in closed position CPO of said gap blocker GPB.

Said shaft seal arrangement SSA seals a gap GP between a rotor RT, extending along a central rotation axis X and a casing CAS of the stationary stator ST. On an inboard-side IBS of said casing CAS a process fluid PF under high pressure is to be sealed off from the ambience AMB respectively an outboard-side OBS.

In said gap GP said shaft seal arrangement SSA comprises a valve V to block a flow of process fluid PF through said gap GP. Said valve V comprises a circumferentially extending gap blocker GPB. Said gap blocker GPB is axially moveable from an open position OPO to a closed position CPO as shown from a respective difference between figure 1 and figure 2, figure 3 and figure 4 or figure 5 and figure 6. Said gap blocker GPB comprises a first seal surface SS1 axially getting in touch with a second seal surface SS2 in said closed position CPO. While every example shown depicts the first seal surface SS1 respectively said gap blocker GPB to be a non rotating part said gap blocker GPB can as well be a rotating part. However, since said gap blocker GPB is more complex than said second seal surface SS2 it is beneficial to keep the gap blocker on the stationary side.

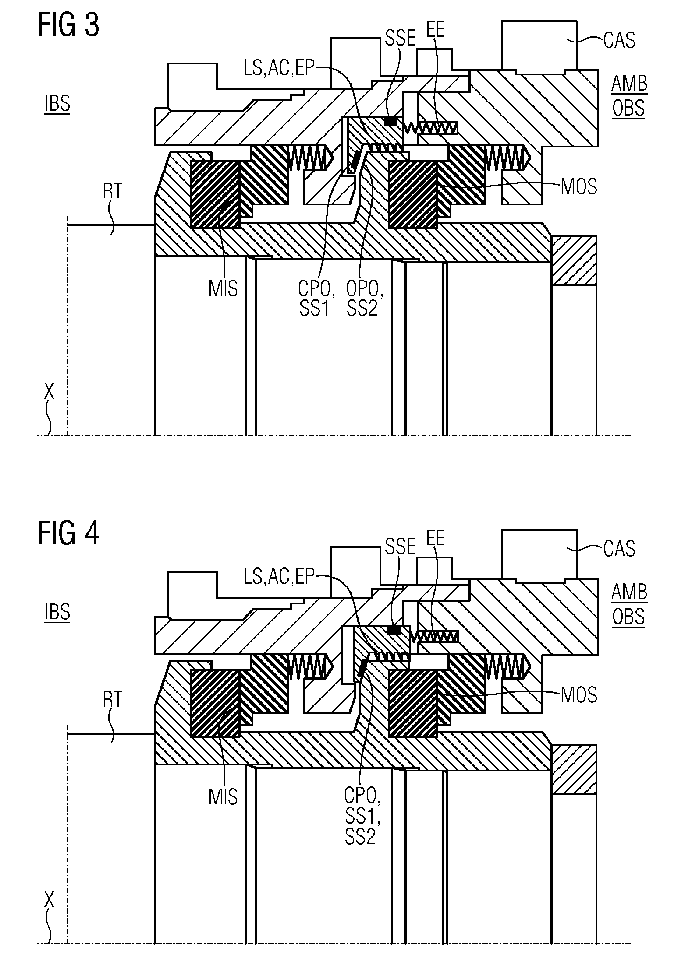

Said gap blocker GPB is directed or indirectly slidingly supported by said casing CAS to move between said open position OPO and said closed position CPO. Further said gap blocker GPB is elastically supported in axial direction by an elastic element EE. Said Elastic element EE is pre-stressed such that said gap blocker GPB is in said open position OPO during normal operation. According to the invention adjacent to said gap blocker GPB a main seal MS is provided. Said main seal MS can be an outboard main seal MOS or an inboard main seal MIS. During normal operation said main seals take the major portion of the overall pressure difference between inboard side IBS and outboard side OBS. If a main inboard seal MIS and a main outboard seal MOS are provided as in figures 3 - 6 a certain relation between the pressure-differences on the main inboard seal MIS and the main outboard seal MOS will establish during normal operation. In most cases the shaft seal arrangement is designed such that the main inboard seal MIS takes the major pressure difference and the main outboard seal MOS takes a minor pressure difference.

Said gap blocker GPB comprises an actuator AC, which is basically an exposed portion EP causing a pressure difference of a flow passing the gap and therefore causing an axial force FA into the direction of the closing position CPO of said gap blocker GPB. The pre-stressed of the elastic element EE is tuned such that during normal operation said axial force FA is compensated by the force from said elastic element EE to keep said gap blocker GPB in said open position OPO. In case of a failure of said main seal - said main inboard seal MIS or said main outboard seal MOS - a flow through said gap GP is at least temporally increasing and therefore causing said axial force FA to increase and move said gap blocker GPB into said closed position CPO. Said actuator AC can be supported or totally replaced by an actuator using an external energy source like an electric, pneumatic or a hydraulic actuator as depicted in figure 1 schematically with the optional element of an electric actuator ACEL.

As shown in figures 1, 2, 3, 4 said exposed portion EP can beneficially be built as a labyrinth seal LS which will increase a pressure loss of a fluid flowing through said gap GP and therefore build up said axial force FA depending on the volume flow rate through said gap GP. As shown in figure 3 and 4 said gap blocker GPB can beneficially be positioned between said main inboard seal MIS and said main outboard seal MOS in said gap GP.

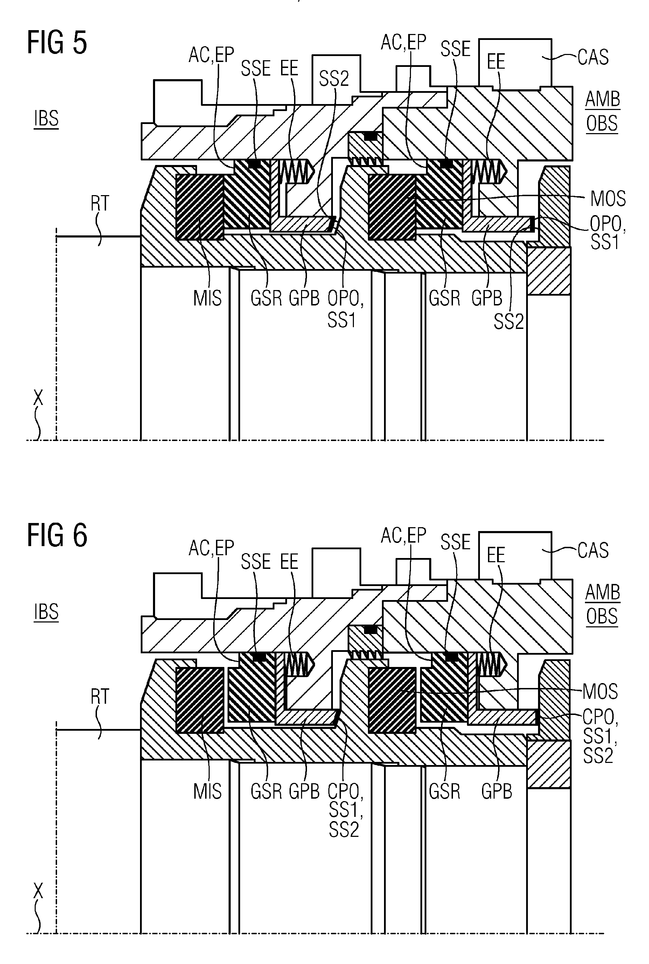

As shown in figures 5 and 6 said gap blocker GPB can as well be fixedly attached to a gas seal ring GSR of a dry gas seal DGS for example of a main inboard seal MIS or a main outboard seal MOS or on both main seals MS. Said gap blocker GPB can as well be one piece with said gas seal ring GSR. Said gas seal ring GSR is pre-stressed in axial direction to obtain a desired sealing effect, as it is common practice in the field of dry gas seals DGS. If said dry gas seal DGS or main seal MS is malfunctioning or destroyed the high pressure on the inboard side IBS will move said gas seal ring GSR into the direction of the outboard side OBS and therefore as well move the fixedly connected gap blocker GPB from an open position OPO into a closed position CPO as shown by the transition between figure 5 and figure 6.

In each embodiment shown in figures 1 - 6 said gap blocker GPB is directly or indirectly provided with a secondary seal element SSE sealing the axial sliding gap between said gap blocker GPB and said casing CAS the respectively said stator ST. This secondary seal element SSE can be an O-ring.

In Figures 4 and 5 said exposed portion EP of said actuator AC is one piece respectively part of said gas seal ring GSR.

## Claims

1. Shaft seal arrangement (SSA) to seal a gap (GP) between a stator (ST) and a rotor (RT),
said rotor (RT) extending rotatable along a rotor (RT) axis (X),
said gap (GP) extending axially from an inboard-side (IBS) to an outboard-side (OBS),
said shaft seal arrangement (SSA) comprising at least one main seal (MS),
**characterized in that**
in said gap (GP) said shaft seal arrangement (SSA) comprises a valve (V) to block a flow through said gap (GP),
wherein said valve (V) comprises a circumferentially extending gap blocker (GBP),
wherein said gap blocker (GPB) is axially moveable from an open position (OPO) to a closed position (CPO),
wherein said gap blocker (GBP) comprises a first seal surface (SS1),
wherein said shaft seal arrangement (SSA) comprises a second seal surface (SS2),
wherein said gap blocker (GPB) is build such that said first seal surface (SS1)
contacts said second seal surface (SS2) or
closes said gap (GP) to a minimal opening after being moved axially from said open position (OPO) to said closed positions (CPO) closing said gap (GP), wherein said gap blocker (GPB) is moved axially by an actuator (AC).

2. Shaft seal arrangement (SSA) according to claim 1,
wherein said shaft seal arrangement (SSA) comprises at least two main seals (MS),
- a main inboard-seal (MIS) and
- a main outboard-seal (MOS),
wherein said main inboard-seal (MIS) is located more proximate to the inboard side (IBS) than said main outboard-seal (MOS).

3. Shaft seal arrangement (SSA) according to claim 2,
wherein said valve (V) is positioned in said gap (GP) between said main inboard-seal (MIS) and main outboardseals (MOS).

4. Shaft seal arrangement (SSA) according to at least one of the preceeding claims 1-3,
wherein said gap (GP) comprises at least one radial step of said stator (ST) and/or said rotor (RT) being at least part of said second seal surface (SS2).

5. Shaft seal arrangement (SSA) according to one of the claims 1-4,
wherein said gap blocker (GPB) belongs to said stator (ST).

6. Shaft seal arrangement (SSA) according to claim 5,
wherein said gap blocker (GPB) belongs to said rotor (RT).

7. Shaft seal arrangement (SSA) according to one of the preceding claims 1 - 6,
wherein said actuator (AC) comprises at least one portion exposed to said gap (GP) such that an axial flow through said gap (GP) causes a pressure loss by said exposed portion (EP) such that said portion (EP) receives an axial force (FA) from said flow moving said gap blocker (GPB) axially into said closed position (CPO).

8. Shaft seal arrangement (SSA) according to claim 7,
wherein said portion (EP) is a labyrinth seal (LS) positioned to seal said gap (GP).

9. Shaft seal arrangement (SSA) according to at least one of the preceding claims 1 - 8,
wherein said gap blocker (GPB) has a ring shape.

10. Shaft seal arrangement (SSA) according to at least one of the preceding claims 7 or 9,
wherein said portion (EP) is a non rotating part.

11. Shaft seal arrangement (SSA) according to the preceding claim 10,
wherein said portion is fixedly attached to or one piece with a stationary axially moveable gas seal ring (GSR) of said inboard-seal or said outboard-seal.

12. Shaft seal arrangement (SSA) according to claim 9,
wherein said portion (EP) is fixedly attached to or one piece with said stationary axially moveable gas seal ring (GSR) of said outboard-seal (OBS).

13. Shaft seal arrangement (SSA) according to at least one of the preceding claims 1 - 10,
wherein said gap blocker (GPB) comprises an elastic element (EE) positioned, supported and pre-stressed such that said elastic element (EE) keeps said gap blocker (GPB) in an open position (OPO) if a force of said actuator (AC) is below a certain limit force (FL).

14. Shaft seal arrangement (SSA) according to at least one of the preceding claims 1 - 11,
wherein an annular secondary seal (SDS) between said gap blocker (GPB) and the part said gap blocker (GPB) is axially moveable connected to seals an axially and circumferentially extending sliding gap between said gap blocker (GPB) and said part said gap blocker (GPB) is slidingly connected to.
